# EUROPEAN PATENT SPECIFICATION

(11) **EP 3 598 564 B1**
(45) Date of publication and mention of the grant of the patent: **19.07.2023**
(21) Application number: 17900751.3
(22) Date of filing: 03.11.2017
(51) Int. Cl.: H01M 50/24, H01M 10/613, H01M 10/625, H01M 10/647, H01M 10/658, H01M 10/04

(54) **PASSIVE PROTECTION BATTERY MODULE STRUCTURE AND MANUFACTURING METHOD THEREFOR**
PASSIVE SCHUTZBATTERIEMODULSTRUKTUR UND HERSTELLUNGSVERFAHREN DAFÜR
STRUCTURE DE PROTECTION PASSIVE DE MODULE DE BATTERIE ET SON PROCÉDÉ DE FABRICATION

(30) Priority: 14.03.2017 CN 201710150039
(43) Date of publication of application: 22.01.2020
(73) Proprietor: Hefei Guoxuan High-Tech Power Energy Co., Ltd., Hefei, Anhui 230012 (CN)
(72) Inventor: LU, Hengfei, Hefei Anhui 230012 (CN); XU, Bangnan, Hefei Anhui 230012 (CN); LIN, Zhihong, Hefei Anhui 230012 (CN); WANG, Yong, Hefei Anhui 230012 (CN)
(74) Representative: Vitina, Maruta
(86) International application number: PCT/CN2017/109409
(87) International publication number: WO 2018/166216

(56) References cited:
- CN-A- 102 187 493
- CN-A- 102 356 483
- CN-A- 106 450 569
- CN-A- 106 785 225
- CN-U- 205 609 583
- CN-U- 205 609 583
- CN-U- 205 900 627
- CN-U- 206 564 306
- JP-A- 2012 033 464
- US-A1- 2011 195 291

## Description

### TECHNICAL FIELD

The present application relates to PACK for power batteries, more particularly to a battery module structure with passive protection and a fabrication method thereof.

### BACKGROUND OF THE INVENTION

Safety of power vehicles has become a focus of people's attention as the power vehicles are popularized, especially for the ternary batteries. The ternary battery is advantageous over the phosphoric acid iron batteries in energy densities, but worse in safety. As the subsidy policy changes, the latest announced subsidies for new energy vehicles are tightly linked to the energy density of battery systems of electric vehicles, but the traditional phosphoric acid iron batteries cannot meet higher requirements for the energy density.

However, chemical components of the ternary battery has a strong activity, which may lead to the thermal runaway under a temperature over 120°C, and the battery cell is overcharged due to the failure of the battery management system (BMS), which may cause dangerous accidents to damage personnel safety.

Therefore, it is of great importance to improve the safety of the ternary battery with ternary battery cells when an energy density of the battery pack is higher than 120 Wh/Kg and to ensure the safety of people in the vehicle when extreme circumstances such as overheating of individual battery cells occur.

US2011/195291 A1 discloses: A battery pack includes a plurality of secondary batteries, a housing for containing the secondary batteries, and at least one heat insulating layer for separating the secondary batteries from one another. The at least one heat insulating layer includes a foam material capable of foaming at a first predetermined temperature of 110°C, or more and less than 200°C, and the thickness of the heat insulating layer increases when the foam material foams. The at least one heat insulating layer includes heat insulating layers each of which is disposed on a surface of each of the secondary batteries. The thickness of the heat insulating layers before the foam material foams is 0.1 to 3 mm.

CN 205 609 583U discloses: A battery module includes a plurality of single cells stacked in sequence along the arrangement direction (D), and the heat insulation pad is bonded between the two adjacent single cells by glue coated on the positive and negative surfaces. The heat insulation pad is provided with a through hole for receiving glue, and the glue in the through hole is bonded to two adjacent single cells. Each cell has the end faces which are used for bonding the heat insulation pad located on both sides of the cell along the arrangement direction (D), and the side surfaces located on both sides of the cell along the front and rear directions (F).

### SUMMARY OF THE INVENTION

A battery module with passive protection structure and a fabrication method thereof are provided by the present invention as a technical solution to the deficiencies of the prior art, which improve the safety of the ternary batteries and delay or even avoid a chain reaction caused by an overheated individual battery cell.

In a first aspect, the present invention provides a battery module structure with passive protection, comprising: a plurality of battery cells 4, a fireproof and thermally insulating spacer 3 and a casing;
the plurality of battery cells 4 are arranged in the casing, and the fireproof and thermally insulating spacer 3 is provided between the battery cells 4; and the fireproof and thermally insulating spacer 3 comprises a substrate coated with a fireproof and thermally insulating coating made of a material that foams when heated.

Wherein, the substrate of the fireproof and thermally insulating spacer 3 is a mica sheet; whereas, the mica sheet contains more than 90% mica and has a bending strength of at least 160 MPa; a thickness of the mica sheet is 0.2 mm with an error range of 0.02 mm; and a thickness of the fireproof and thermally insulating coating is 0.3 mm with an error range of 0.03 mm; and the mica sheet is coated with the fireproof and thermally insulating coating on one side, and the other side of the mica sheet is coated with an adhesive to bond with a battery cell 4 adjacent to the fireproof and thermally insulating spacer.

In some embodiments, the fireproof and thermally insulating coating of the fireproof and thermally insulating spacer 3 is evenly coated on the substrate and foams to absorb a heat conducted by the substrate at a preset temperature.

In the second aspect, the present invention provides a fabrication method of the battery module structure with passive protection, comprising the following steps:
providing battery cells 4 in the casing;
fixing the fireproof and thermally insulating spacer 3 between the battery cells 4; wherein the fireproof and thermally insulating spacer 3 comprises the substrate coated with the fireproof and thermally insulating coating made of the material that foams when heated; and
applying a pressure larger than a preset pressure to a battery cell 4 via the end plates 1 on both ends of the casing to move the end plates 1 on both ends towards the battery cells 4, and fixing the end plates 1 with the side plate 2 of the casing through the rivet after reaching a limit position.

In some embodiments, the fabrication method further comprises:
after a fireproof and thermally insulating coating is applied on the substrate of the fireproof and thermally insulating spacer 3, performing a corona treatment on the fireproof thermal insulation coating.

The battery module structure with passive protection and the fabrication method thereof are provided by the present invention. In the provided battery module with passive protection, the battery cells of the battery module are respectively spaced by the fireproof and thermally insulating spacer; and an excellent thermal insulation is achieved by the fireproof and thermally insulating spacer due to a mica sheet and the endothermic foaming of the fireproof and thermally insulating coating when heated, such that the risk of having a thermal runaway or even breaking the explosion-proof valve when the battery cells are overheated is effectively delayed or avoided in case that the adjacent battery cell is overcharged or has a thermal runaway under a high temperature. This gives sufficient time for people in the vehicle to evacuate, ensuring the personnel safety.

### BRIEF DESCRIPTION OF THE DRAWINGS

FIG. 1 is a perspective view of a battery module structure with passive protection with 20 battery cells according to an embodiment of the present invention;
FIG. 2 is an exploded view of the battery module structure with passive protection with 20 battery cells according to an embodiment of the present invention;
FIG. 3 is a perspective view of a fireproof and thermally insulating spacer according to an embodiment of the present invention; and
FIG. 4 is a partial enlarged view of the fireproof and thermally insulating spacer according to an embodiment of the present invention.

### DETAILED DESCRIPTION OF EMBODIMENTS

The embodiments of the present invention will be thoroughly described in conjunction with the accompanying drawings to further illustrate the objectives, technical solutions, and advantages of the present invention. Apparently, the mentioned embodiments are only a part of the embodiments of the present invention. All other embodiments obtained by the skilled in the art based on the embodiments of the present invention without creative efforts shall fall within the scope of the claims

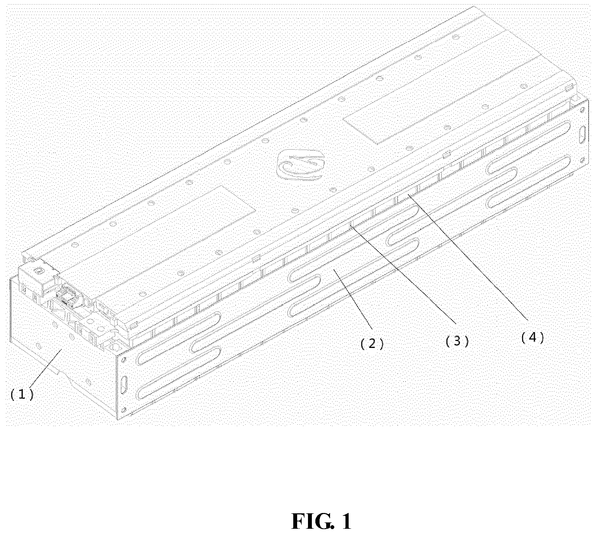

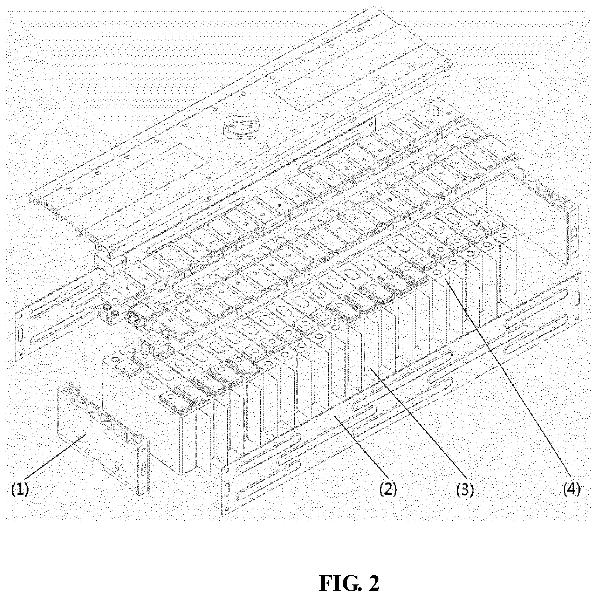

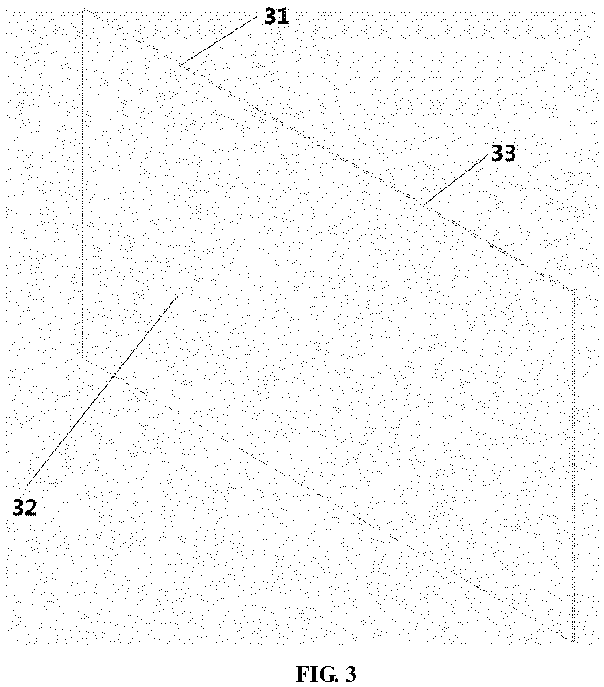

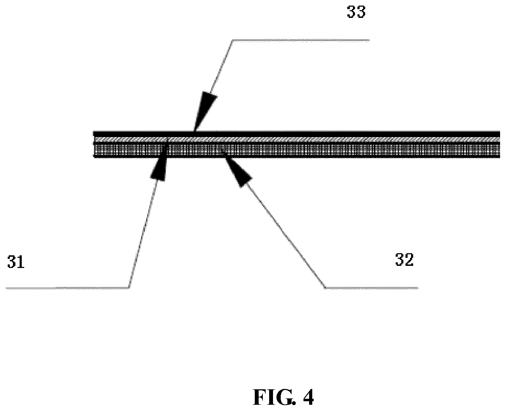

In the first aspect, as shown in FIGS. 1-4, illustrated is a battery module with passive protection, which comprises a plurality of battery cells 4, a fireproof and thermally insulating spacer 3 and a casing.

The battery cells 4 are provided in the casing, and the fireproof and thermally insulating spacer 3 is provided between the battery cells 4 and comprises a substrate 31 coated with a fireproof and thermally insulating coating 32 made of a material that foams when heated.

In this embodiment, the battery cells in the battery module are respectively spaced by the fireproof and thermally insulating spacer 3. An excellent thermal insulation can be achieved by the fireproof and thermally insulating spacer 3 due to a mica sheet and the endothermic foaming of the fireproof and thermally insulating coating when heated, such that the risk of having a thermal runaway or even breaking the explosion-proof valve when the battery cells are overheated can be effectively delayed or avoided in case that the adjacent battery cell is overcharged or has a thermal runaway under a high temperature. This gives sufficient time for people in the vehicle to evacuate, ensuring the personnel safety.

The substrate 31 of the fireproof and thermally insulating spacer 3 is a mica sheet; a thickness of the mica sheet is 0.2 mm with an error range of 0.02 mm, e.g. the thickness of the substrate 31 could be 0.2 mm. The thickness of the fireproof and thermally insulating coating could be 0.3mm with an error range of 0.03 mm, e.g. the thickness of the fireproof and thermally insulating coating could be 0.3 mm. The mica sheet is coated with the fireproof and thermally insulating coating on one side, and the other side of mica sheet is covered with an adhesive. The adhesive fixes the fireproof and thermally insulating spacer 3 with a battery cell 4 by bonding.

In some embodiments, the fireproof and thermally insulating coating 31 of the fireproof and thermally insulating spacer 3 is evenly coated on the substrate 31 and massively absorbs the heat conducted by the substrate by foaming rapidly at a preset temperature (e.g. at a temperature of 120°C), and the purpose of fireproofing and thermal insulation is achieved through the chemical foaming mechanism.

In some embodiments, the casing comprises end plates 1 on both ends and a side plate 2 on a side. The battery cells 4, the fireproof and thermally insulating spacer 3 provided therebetween and the end plates 1 on both ends are integrally bonded by a double-sided adhesive with a high viscosity; and the end plates 1 are riveted with the side plate 2 through a rivet, such that the battery cells 4 and the fireproof and thermally insulating spacer 3 are packaged in the casing.

It should be understood that the battery module with passive protection has various embodiments, and a preferred embodiment of the battery module with passive protection will be described in detail with reference to FIGS. 1-4.

In this embodiment, illustrated is a battery module with passive protection with 20 battery cells, comprising two end plates 1, two side plates 2, 19 fireproof and thermally insulating spacers 3 and 20 ternary VDA battery cells 4. Each end of the 20 ternary VDA battery cells 4 is arranged with an end plate 1. The ternary VDA battery cell 4 and the fireproof and thermally insulating spacers 3 are pressed to a desire size by a pressure device and are firmly bonded by a double-sided adhesive. The end plates 1 are riveted with the side plates 2 through a rivet.

The 20 ternary VDA battery cells 4 are respectively spaced by the fireproof and thermally insulating spacers 3, and with the adhesive 33 on the fireproof thermally and insulating spacer 3 and the double-sided adhesive with the high viscosity, the ternary VDA battery cells 4 are firmly bonded with the fireproof and thermally insulating spacers 3. The size of a rivet hole on the side plate 2 is designed to be sufficient when the ternary VDA battery cells 4 and the fireproof and thermally insulating spacers 3 are pressed to a desired size with a preset pressure that is over 100Kg, such that the side plates 2 are riveted with the end plates 1 by a stainless steel rivet of shear resistance as a whole frame after the rivet holes on the side plates 2 aligned with the rivet holes on the end plates 1.

The fireproof and thermally insulating spacer 3 comprises a mica sheet substrate 31, the fireproof and thermally insulating coating 32 and the adhesive 33 on a back of the mica sheet. The mica sheet substrate 31 contains more than 90% mica and has a bending strength of at least 160 MPa, which provides a sufficient mechanical strength while having a great thermal insulation and insulation performance, so the required strength of the substrate for applying the fireproof and thermally insulating coatings is reached. The chemical compositions of the fireproof and thermally insulating coating 32 has a polymer structure which can rapidly foam at a high temperature to absorb a large amount of heat, achieving the purpose of fireproofing and thermal insulation through a chemical foaming mechanism. After the fireproof and thermally insulating coating 32 is coated on the mica sheet substrate 31, a corona treatment is performed to ensure that the bonding between the mica sheet substrate 31 and the ternary VDA battery cell through the double-sided adhesive is firm and reliable. The double-sided adhesive between the ternary VDA battery cell 4 and the fireproof and thermally insulating spacer 3 and the adhesive 33 on the fireproof and thermally insulating spacer 3 are required to withstand a high temperature of at least 80°C and with a viscosity larger than 24 hrs/0.5 Kg.

The safety of the battery module is greatly improved by providing a spacer excellent in fireproofing and thermal insulating between the ternary VDA battery cells of the battery module with passive protection of the embodiment, which prevents the abnormality of one battery cell from spreading over the whole battery module and causes no threat to personnel safety.

In the second aspect, illustrated is a fabrication method of the battery module with passive protection, comprising the following steps:
S101) the battery cells 4 are provided in the casing;
S102) the fireproof and thermally insulating spacer 3 is provided between the battery cells 4, where the fireproof and thermally insulating spacer 3 comprises the substrate coated with the fireproof and thermally insulating coating made of the material that foams when heated;
S103) a pressure larger than the preset pressure is applied to the battery cells 4 via the end plates 1 on both ends of the battery case to move the end plates 1 of both ends towards the battery cell 4, and the end plates 1 are fixed with the side plate 2 of the casing through a rivet after reaching a limit position.

Further, in Step 102, the battery cells 4 and the fireproof and thermally insulating spacers 3 are bonded via the double-sided adhesive with a high viscosity and are fixed by a pressure transferred from the end plates 1 on both ends.

In addition, the fabrication method further comprises the following steps: after the fireproof and thermally insulating coating is applied on the substrate of the fireproof and thermally insulating spacer 3, the corona treatment is performed on the fireproof and thermally insulating coating, such that the battery cell is firmly bonded with the double-sided adhesive.

The fabrication method is provided based on the battery module with passive protection provided in the first aspect. It should be noted that the fabrication method will change as the battery module with passive protection changes, so it will not be limited herein.

In summary, in the battery module with passive protection and the fabrication method thereof provided by the embodiments of the present invention, the battery cells in the battery module are respectively spaced by the fireproof and thermally insulating spacers. An excellent thermal insulation can be achieved by the fireproof and thermally insulating spacers due to a mica sheet and the endothermic foaming of the fireproof and thermally insulating coating when heated, such that the risk of having a thermal runaway or even breaking the explosion-proof valve when the battery cells are overheated can be effectively delayed or avoided in case that the adjacent battery cell is overcharged or has a thermal runaway under a high temperature. This gives sufficient time for people in the vehicle to evacuate, ensuring the personnel safety.

### Industrial applicability

The present invention provides a battery module with passive protection and a fabrication thereof, relating to PACK of the power battery. In the battery module with passive protection, the cells in the battery module are respectively spaced by the fireproof and thermally insulating spacers. An excellent thermal insulation can be provided by the fireproof and thermally insulating spacer due to a mica sheet and the endothermic foaming of the fireproof and thermally insulating coating when heated, such that the risk of having a thermal runaway or even breaking the explosion-proof valve when the battery cells are overheated can be effectively delayed or avoided in case that the adjacent battery cell is overcharged or has a thermal runaway under a high temperature, which gives sufficient time for people in the vehicle to evacuate, thus ensuring the personnel safety. Therefore, the present application has excellent industrial application prospects.

## Claims

1. A battery module structure with passive protection, comprising a plurality of battery cells (4), a fireproof and thermally insulating spacer (3) and a casing;
**characterized in that** the battery cells (4) are arranged in the casing, and the fireproof and thermally insulating spacer (3) is provided between the battery cells (4); and
the fireproof and thermally insulating spacer (3) comprises a substrate (31) coated with a fireproof and thermally insulating coating (32) made of a material that foams when heated;
the substrate (31) of the fireproof and thermally insulating spacer (3) is a mica sheet; the mica sheet contains more than 90% mica and has a bending strength of at least 160 MPa;a thickness of the mica sheet is 0.2 mm with an error range of 0.02 mm; and a thickness of the fireproof and thermally insulating coating (32) is 0.3 mm with an error range of 0.03 mm;and
the mica sheet is coated with the fireproof and thermally insulating coating (32) on one side, and the other side of the mica sheet is coated with an adhesive (33) to bond with a battery cell (4) adjacent to the fireproof and thermally insulating spacer (3).

2. The battery module structure according to claim 1, **characterized in that** the fireproof and thermally insulating coating of the fireproof and thermally insulating spacer (3) is evenly coated on the substrate (31) and foams to absorb a heat conducted by the substrate at a preset temperature.

3. A fabrication method of the battery module structure according to any one of claims 1-2, comprising:
providing the battery cells (4) in the casing;
fixing the fireproof and thermally insulating spacer (3) between the battery cells (4); wherein the fireproof and thermally insulating spacer (3) comprises the substrate coated with the fireproof and thermally insulating coating made of the material that foams when heated; and
applying a pressure larger than a preset pressure to the battery cells (4) via the end plates (1) on both ends of the casing to move the end plates (1) on both ends towards the battery cells (4), and fixing the end plates (1) with the side plate (2) of the casing through the rivet after reaching a limit position.

4. The fabrication method according to claim 3, further comprising:
after a fireproof and thermally insulating coating is applied on the substrate of the fireproof and thermally insulating spacer (3), performing a corona treatment on the fireproof thermal insulation coating.

## Patentansprüche

1. Batteriemodulstruktur mit passivem Schutz, die eine Vielzahl von Batteriezellen (4), einen feuerfesten und wärmedämmenden Abstandshalter (3) und ein Gehäuse umfasst;
**dadurch gekennzeichnet, dass** die Batteriezellen (4) in dem Gehäuse angeordnet sind und der feuerfeste und wärmedämmende Abstandshalter (3) zwischen den Batteriezellen (4) vorgesehen ist; und
dass der feuerfeste und wärmedämmende Abstandshalter (3) ein Substrat (31) umfasst, das mit einer feuerfesten und wärmedämmenden Beschichtung (32) aus einem Material beschichtet ist, das bei Erwärmung aufschäumt;
dass das Substrat (31) des feuerfesten und wärmedämmenden Abstandshalters (3) eine Glimmerfolie ist, wobei die Glimmerfolie mehr als 90 % Glimmer enthält und eine Biegefestigkeit von mindestens 160 MPa aufweist, wobei eine Dicke der Glimmerfolie 0,2 mm mit einem Fehlerbereich von 0,02 mm beträgt; wobei eine Dicke der feuerfesten und wärmedämmenden Beschichtung (32) 0,3 mm mit einem Fehlerbereich von 0,03 mm beträgt; und
dass die Glimmerfolie auf einer Seite mit der feuerfesten und wärmedämmenden Beschichtung (32) beschichtet ist und die andere Seite der Glimmerfolie mit einem Klebstoff (33) beschichtet ist, um sie mit einer an das feuerfeste und wärmedämmenden Abstandshalter (3) angrenzenden Batteriezelle (4) zu verbinden.

2. Batteriemodulstruktur nach Anspruch 1, **dadurch gekennzeichnet, dass** die feuerfeste und wärmedämmende Beschichtung des feuerfesten und wärmedämmenden Abstandshalters (3) gleichmäßig auf das Substrat (31) aufgetragen ist und aufschäumt, um eine durch das Substrat bei einer vorgegebenen Temperatur geleitete Wärme zu aufzunehmen.

3. Herstellungsverfahren der Batteriemodulstruktur nach einem der Ansprüche 1-2, umfassend:
Bereitstellen der Batteriezellen (4) im Gehäuse;
Befestigen des feuerfesten und wärmedämmenden Abstandshalters (3) zwischen den Batteriezellen (4); wobei der feuerfeste und wärmedämmenden Abstandshalter (3) das mit der feuerfesten und wärmedämmenden Beschichtung aufgetragene Substrat umfasst, das aus dem Material besteht, das bei Erwärmung aufschäumt; und
Aufbringen eines Drucks, der größer als ein voreingestellter Druck ist, auf die Batteriezellen (4) über die Endplatten (1) an beiden Enden des Gehäuses, um die Endplatten (1) an beiden Enden in Richtung der Batteriezellen (4) zu bewegen, und Fixieren der Endplatten (1) mit der Seitenplatte (2) des Gehäuses durch den Niet nach Erreichen einer Grenzposition.

4. Herstellungsverfahren nach Anspruch 3, das ferner umfasst:
nach dem Aufbringen einer feuerfesten und wärmedämmenden Beschichtung auf das Substrat des feuerfesten und wärmeisolierenden Abstandshalters (3), Durchführen einer Koronabehandlung auf der feuerfesten wärmedämmenden Beschichtung.

## Revendications

1. Structure de module de batterie à protection passive, comprenant une pluralité de cellules de batterie (4), une entretoise ignifuge et thermiquement isolante (3) et un boîtier ;
**caractérisé en ce que** lesdites cellules de batterie (4) sont disposées dans ledit boîtier, et ladite entretoise ignifuge et thermiquement isolante (3) est prévue entre lesdites cellules de batterie (4) ; et
ladite entretoise ignifuge et thermiquement isolante (3) comprend un substrat (31) revêtu d'un revêtement ignifuge et thermiquement isolant (32) constitué d'un matériau qui mousse lorsqu'il est chauffé ;
ledit substrat (31) de ladite entretoise ignifuge et thermiquement isolant (3) est une feuille de mica ; ladite feuille de mica contient plus de 90% de mica et a une résistance à la flexion d'au moins 160 MPa ; une épaisseur de ladite feuille de mica est de 0,2 mm avec une plage d'erreur de 0,02 mm ; et une épaisseur dudit revêtement ignifuge et thermiquement isolant (32) est de 0,3 mm avec une plage d'erreur de 0,03 mm ; et
ladite feuille de mica est revêtue dudit revêtement ignifuge et thermiquement isolant (32) sur un côté, et l'autre côté de ladite feuille de mica est revêtu d'un adhésif (33) pour se lier à une cellule de batterie (4) adjacente à ladite entretoise ignifuge et thermiquement isolante (3).

2. Ladite structure de module de batterie selon la revendication 1, **caractérisée en ce que** ledit revêtement ignifuge et thermiquement isolant de ladite entretoise ignifuge et thermiquement isolante (3) est appliqué uniformément sur ledit substrat (31) et mousse pour absorber une chaleur conduite par ledit substrat à une température prédéfinie.

3. Procédé de fabrication de ladite structure de module de batterie selon l'une quelconque des revendications 1 à 2, comprenant :
fournir lesdites cellules de batterie (4) dans ledit boîtier ;
fixer ladite entretoise ignifuge et thermiquement isolante (3) entre lesdites cellules de batterie (4) ; dans lequel ladite entretoise ignifuge et thermiquement isolante (3) comprend ledit substrat revêtu dudit revêtement ignifuge et thermiquement isolant constitué dudit matériau qui mousse lorsqu'il est chauffé ; et
appliquer une pression supérieure à une pression prédéfinie auxdites cellules de batterie (4) via lesdites plaques d'extrémité (1) aux deux extrémités dudit boîtier pour déplacer lesdites plaques d'extrémité (1) aux deux extrémités vers lesdites cellules de batterie (4), et fixer lesdites plaques d'extrémité (1) avec ladite plaque latérale (2) dudit boîtier à travers le rivet après avoir atteint une position limite.

4. Ledit procédé de fabrication selon la revendication 3, comprenant en outre :
après l'application d'un revêtement ignifuge et thermiquement isolant sur ledit substrat de ladite entretoise ignifuge et thermiquement isolante (3), effectuer un traitement corona sur ledit revêtement ignifuge et thermiquement isolant.
